**Europäisches Patentamt**

**European Patent Office**

**Office européen des brevets**

(19)

(11)  **EP 1 609 814 A1**

(12)  **EUROPÄISCHE PATENTANMELDUNG**

(43) Veröffentlichungstag:
  **28.12.2005  Patentblatt 2005/52**

(51) Int Cl.⁷: **C08J 7/04**

(21) Anmeldenummer: **05013097.0**

(22) Anmeldetag: **17.06.2005**

(84) Benannte Vertragsstaaten:
  **AT BE BG CH CY CZ DE DK EE ES FI FR GB GR
  HU IE IS IT LI LT LU MC NL PL PT RO SE SI SK TR**
  Benannte Erstreckungsstaaten:
  **AL BA HR LV MK YU**

(30) Priorität: **26.06.2004  DE 102004030977**

(71) Anmelder: **Mitsubishi Polyester Film GmbH
  65203 Wiesbaden (DE)**

(72) Erfinder:
  • **Klein, Oliver, Dr.
    55126 Mainz (DE)**

• **Peiffer, Herbert, Dr. Professor
  55126 Mainz (DE)**
• **Davis, Richard Lee
  65187 Wiesbaden (DE)**

(74) Vertreter: **Schweitzer, Klaus et al
  Patentanwaltskanzlei Zounek,
  Industriepark Kalle-Albert,
  Gebäude H391
  Rheingaustrasse 190-196
  65174 Wiesbaden (DE)**

(54)  **Metallisierte oder keramisch beschichtete Polyesterfolie enthaltend Poly(mxyloladipinamid)**

(57)  Polyesterfolien, welche neben thermoplastischem Polyester wie z. B. Polyethylenterephthalat 5-45 Gew.-% Poly(m-xylol-adipinamid) und 0,02 bis 1 Gew.-% an Füllstoffen enthalten, mindestens auf einer Oberfläche metallisiert oder keramisch beschichtet sind und die nach dem sequenziellen Streckverfahren hergestellt werden, zeichnen sich durch verbesserte mechanische Eigenschaften wie einen Elastizitätsmodul von größer als 3500 N/mm² in beiden Orientierungsrichtungen, einen hohen Glanz, eine geringe Trübung und durch sehr gute Barriereeigenschaften gegenüber Sauerstoffdurchtritt aus und sind daher als Verpackungsmaterial für Nahrungs- und Genussmittel geeignet.

**EP 1 609 814 A1**

**Beschreibung**

Die Erfindung betrifft eine biaxial orientierte Polyesterfolie, die Polyester und Poly(m-xylol-adipinamid) enthält und auf mindestens einer Seite metallisch oder keramisch beschichtet ist. Die Erfindung betrifft weiterhin ein Verfahren zur Herstellung der Folie und ihre Verwendung.

In vielen Fällen wird bei Lebensmittelverpackungen eine hohe Sperrwirkung (gleichbedeutend mit einer geringen Durchlässigkeit) gegenüber Gasen, Wasserdampf und Aromastoffen verlangt.

Biaxial orientierte Polyesterfolien, die sich durch eine hohe Sperrwirkung, d. h. eine verbesserte Barriere auszeichnen, sind nach dem Stand der Technik bekannt. In den meisten Fällen erhalten die Folien ihre verbesserte Barriere off-line nach der Herstellung durch einen weiteren Verarbeitungsschritt. Beispiele hierfür sind die Extrusionsbeschichtung, die Beschichtung oder die Laminierung mit Barrierematerialien oder die Plasmapolymerisation in Verbindung mit der Vakuumbeschichtung. Ein weiteres gängiges Verfahren, solche Verpackungen herzustellen, besteht darin, die dafür verwendeten Kunststofffolien mit Aluminium im Hochvakuum zu bedampfen bzw. zu metallisieren. Ein anderes gängiges Verfahren besteht darin, die Folien mit keramischen Materialien wie $SiO_x$, $Al_xO_y$ oder $MgO_x$, zu beschichten. Dies kann z. B. nach dem PVD-, CVD- oder nach dem PECVD-Verfahren geschehen. Die Sperrwirkung gegenüber den oben genannten Stoffen hängt im wesentlichen von der Art der Polymeren in der Folie und der Güte der aufgebrachten Sperrschichten ab. So haben metallisierte, biaxial orientierte Polyesterfolien eine sehr hohe Sperrwirkung gegenüber Gasen wie Sauerstoff und Aromastoffen. Metallisierte, biaxial orientierte Polypropylenfolien wiederum besitzen eine hohe Wasserdampfbarriere.

In der WO 99/62694 wird ein Verfahren näher beschrieben, bei dem eine mehrschichtige, koextrudierte Polyesterfolie, die mindestens eine Schicht aus EVOH (Ethylen-Vinyl-Alkohol) enthält, simultan biaxial verstreckt wird. Diese Folie zeichnet sich durch gute mechanische Eigenschaften, insbesondere aber durch gute Barriereeigenschaften gegen den Durchtritt von Sauerstoff aus. Als bester Wert für die erzielbare Sauerstoffdurchlässigkeit OTR (engl. Oxygen Transmission Rate) werden in der Schrift 5 $cm^3/(m^2 \cdot bar \cdot d)$ angegeben. Nachteilig an dem Verfahren ist u. a., dass das bei der Herstellung anfallende Regenerat dem Herstellungsprozess nicht wieder zugeführt werden kann, ohne dass die Folie ihre guten optischen und physikalischen Eigenschaften verliert.

Bei der Folie nach der EP-A-0 675 158 handelt es sich um eine gereckte Verbundfolie auf Polyesterbasis mit verbesserten Barriereeigenschaften gegenüber Gasen. Die Folie ist zumindest auf einer der beiden Seiten mit einer 0,3 µm oder weniger dicken Schicht aus Polyvinylalkohol überzogen, der einen zahlenmäßigen mittleren Polymerisationsgrad von 350 und mehr hat, wobei die mittlere Rauigkeit $R_z$ der zu beschichtenden Seite der Basisfolie 0,30 µm oder weniger beträgt und wobei diese Seite durch eine bestimmte Verteilung der Erhebungen auf der Folienoberfläche gekennzeichnet ist. Diese Verbundfolie weist eine Sauerstoffdurchlässigkeit auf, die weniger als 3 $cm^3/(m^2 \cdot bar \cdot d)$ beträgt. Nachteilig an dieser Verbundfolie ist ihre geringe Beständigkeit z. B. gegenüber Feuchtigkeit. Bei Kontakt mit Wasser oder Wasserdampf geht die Haftung der Barrierebeschichtung aus Polyvinylalkohol zur Polyesterfolie verloren mit dem Effekt, dass die Barrierebeschichtung von der Polyesterfolie abwaschbar ist.

In der JP 2001-001399 wird eine transparente biaxial orientierte Folie beschrieben, die aus einer Mischung von Polyethylenterephthalat und Poly(m-xylol-adipinamid) (MXD6) besteht. Der Anteil von Poly(m-xylol-adipinamid) (MXD6) in der Folie liegt zwischen 10 und 40 Gew.-% und der entsprechende Anteil von Polyethylenterephthalat zwischen 60 und 90 Gew.-%. Die Folie wird erfindungsgemäß simultan biaxial verstreckt. Für die Streckparameter werden in der Schrift folgende Daten angegeben: Die Streckverhältnisse in beiden Richtungen liegen zwischen 2,5 und 5,0. In den Bespielen wird die Folie aber lediglich um den Faktor 3,0 in Maschinenrichtung und um den Faktor 3,3 quer zur Maschinenrichtung verstreckt. Das Gesamtstreckverhältnis beträgt damit 9,9. Die Strecktemperaturen in beiden Richtungen liegen zwischen 80 und 140 °C. In den Beispielen wird die Folie in beiden Richtungen bei 90 °C gestreckt.

Nach der JP 2001-001399 weist eine simultan verstreckte Folie gegenüber einer Folie, die sequenziell verstreckt worden ist (z. B. zuerst in Maschinenrichtung (MD oder MDO) und dann in Querrichtung (TD oder TDO)), eine geringere Trübung auf und ist prozesssicherer, d. h. mit einer geringeren Anzahl von Abrissen bei der zweiten Streckung (z. B. in Querrichtung) herzustellen. Gemäß obiger Schrift tritt bei der sequenziellen (nicht erfindungsgemäßen) Verstreckung im ersten Streckschritt (z. B. MDO) eine derart große Kristallisation auf, dass die Folie bei der zweiten (nachfolgenden) Verstreckung trüb und gegenüber einer weiteren Verstreckung empfindlicher wird. Entsprechend den in der Schrift dargelegten (Vergleichs-) Beispielen 3 und 4 kann eine Polyesterfolie mit 10 bis 40 % MXD6 nicht nach dem sequenziell arbeitenden Verfahren hergestellt werden, da sie in der zweiten Streckung reißt.

Die gemäß der JP 2001-001399 nach dem Simultanverfahren hergestellten biaxial orientierten Folien zeichnen sich durch eine niedrige Trübung, insbesondere aber durch eine gute Barriere hinsichtlich der Permeation von Sauerstoff aus. Mit der Folie wird eine Sauerstoffdurchlässigkeit OTR erzielt, die kleiner als 30 $cm^3/(m^2 \cdot bar \cdot d)$ ist. Die Trübung der Folie ist erfindungsgemäß kleiner als 15 %. Die Folie weist aber auch eine Reihe von Nachteilen auf: Sie hat vergleichsweise geringe mechanische Festigkeiten. Insbesondere sind der Elastizitätsmodul (E-Modul) und die Reißfestigkeit verbesserungswürdig. Sie neigt zum Verblocken und ist damit nur bedingt wickelbar. Sie hat vergleichsweise raue Oberflächen. Die Folie hat ferner ein mattes Aussehen, was für viele Anwendungen unerwünscht ist. Sie ist damit auch vergleichsweise weniger gut zu bedrucken, zu metallisieren oder zu beschichten.

Aufgabe der vorliegenden Erfindung war es, eine biaxial orientierte Polyesterfolie zur Verfügung zu stellen, die sich durch eine hohe Sauerstoffbarriere (durch die Folie sollten weniger als 1 cm$^3$ Sauerstoff pro Quadratmeter und pro Tag diffundieren, wenn Luft mit einem Druck von 1 bar darauf lastet) auszeichnet.

Des weiteren sollte die Folie gegenüber Folien nach dem Stand der Technik folgende vorteilhafte Eigenschaften / Eigenschaftskombinationen aufweisen:

· Sie soll höhere mechanische Festigkeiten aufweisen, insbesondere einen höheren E-Modul besitzen.

· Sie soll einen hohen Glanz haben und damit gut bedruckbar, gut metallisierbar und gut beschichtbar sein.

· Sie soll gut wickelbar sein (nicht verblocken) und zu einer Kundenrolle ohne Wickeldefekte verarbeitbar sein.

· Sie soll sich wirtschaftlich herstellen lassen. Dies bedeutet beispielsweise, dass zur Herstellung der Folie in der Industrie übliche Streckverfahren eingesetzt werden, die bei hoher Geschwindigkeit von z. B. über 350 m/min (über 400 m/min) arbeiten können. Auf das teure simultan arbeitende Streckverfahren, das nach dem Stand der Technik bei deutlich geringerer Geschwindigkeit (< 350 m/min) und Breite (< 5 m) arbeitet und damit unwirtschaftlicher ist, sollte nicht zurückgegriffen werden müssen.

· Bei der Herstellung der Folie sollte gewährleistet sein, dass das anfallende Regenerat in einer Menge von bevorzugt 5 bis zu 60 Gew.-% wieder dem Herstellprozess (Extrusion und biaxiale Verstreckung) zugeführt werden kann, ohne dass dabei die physikalischen und optischen Eigenschaften der Folie, insbesondere aber die Barriereeigenschaften gegenüber Sauerstoff, nennenswert negativ beeinflusst werden.

Die Folie sollte den bekannten Verpackungsfolien dieser Art in den übrigen Eigenschaften mindestens gleichwertig sein.

Gelöst wird die Aufgabe durch eine bevorzugt nach dem sequenziellen Streckverfahren hergestellte, biaxial orientierte Polyesterfolie, die Poly(m-xylol-adipinamid) (MXD6) in einer Konzentration von bevorzugt 5 bis 45 Gew.-% enthält, einen Elastizitätsmodul (E-Modul) von bevorzugt mindestens 3500 N/mm$^2$ in beiden Orientierungsrichtungen aufweist (MD und TD) und zumindest auf einer Folienoberfläche metallisiert oder keramisch beschichtet ist.

Die Folie enthält bevorzugt Füllstoffe in einer Konzentration von bevorzugt 0,02 bis 1 Gew.-%.

Die Folie enthält ferner einen thermoplastischen Polyester, bevorzugt zu mindestens 55 Gew.-%. Der Anteil an Poly(m-xylol-adipinamid) in der Folie beträgt bevorzugt 5 bis 45 Gew.-%, insberondere 5 bis 40 Gew.-%.

Soweit nicht anders angegeben, beziehen sich alle Gew.-%-Angaben auf das Gesamtgewicht der erfindungsgemäßen Folie.

Poly(m-xylol-adipinamid) (MXD6), auch als Poly-m-Xylylen-adipinamid oder PA-MXD6 bezeichnet, ist ein Polykondensationsprodukt (Polyarylamid) aus m-Xylylendiamin und Adipinsäure und wird in verschiedenen Typen auf dem Markt angeboten, die grundsätzlich alle für den erfindungsgemäßen Zweck geeignet sind. Bevorzugt werden jedoch Typen mit einer Schmelzviskosität von kleiner als 6000 Poise (= 600 Pa • s, T = 280 °C, Schergeschwindigkeit $\gamma_{Punkt} \geq 100$ s$^{-1}$).

Die biaxial orientierte, zumindest auf einer Oberfläche metallisierte oder keramisch beschichtete Polyesterfolie nach der vorliegenden Erfindung weist gegenüber Folien nach dem Stand der Technik verbesserte mechanische und verbesserte optische Eigenschaften auf, insbesondere auch einen erhöhten Glanz (letzteres gilt sowohl für die transparente als auch für die metallisierte bzw. keramisch beschichtete Folie). Darüber hinaus zeichnet sich die metallisierte bzw. keramisch beschichtete Folie durch hervorragende Barriereeigenschaften, insbesondere gegenüber dem Durchtritt von Gasen wie z. B. Sauerstoff, aus.

Die metallisierte bzw. keramisch beschichtete Folie besitzt eine Sauerstoffdurchlässigkeit (OTR) von bevorzugt weniger als 0,5 cm$^3$/(m$^2$ • bar • d), wenn sie metallisiert worden ist, bzw. von weniger als 1,0 cm$^3$/(m$^2 \cdot$ bar $\cdot$ d), wenn sie keramisch beschichtet worden ist; bezogen auf eine Folie mit einer Dicke von 12 µm.

Weiterhin zeigt die Folie das gewünschte Verarbeitungs- und Wickelverhalten. Sie zeigt insbesondere keine Klebeneigung an Walzen oder anderen mechanischen Teilen, keine Blockprobleme und keine Längsrillen beim Wikkeln. Mit der Folie kann eine Kundenrolle in sehr guter Wickelqualität ohne weiteres hergestellt werden.

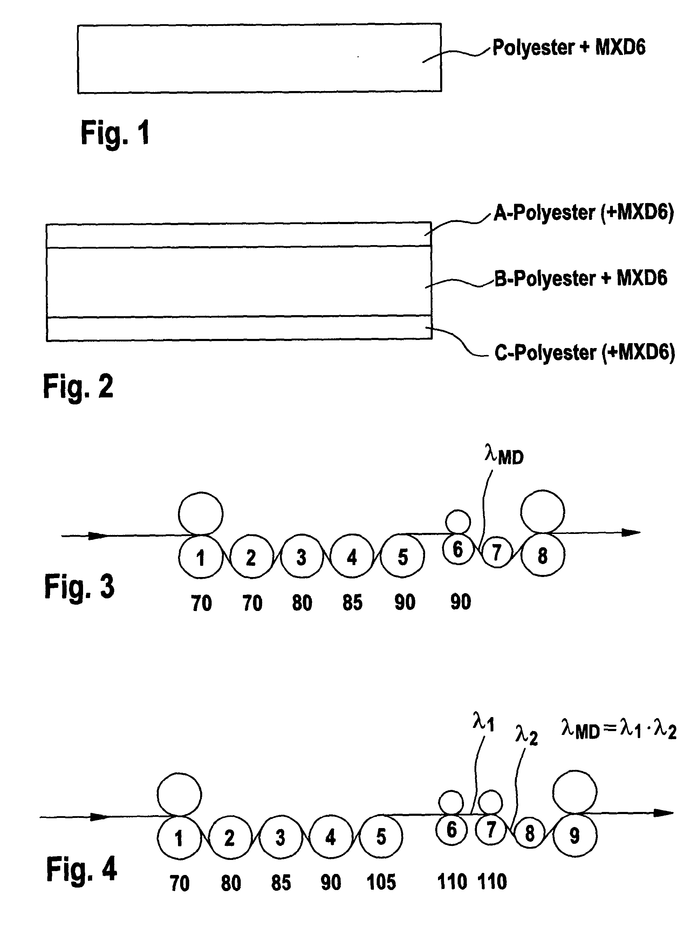

Die Folie nach der vorliegenden Erfindung besteht bevorzugt aus der erfindungsgemäßen Polymermischung. In diesem Fall ist die Folie einschichtig aufgebaut (vgl. Figur 1). In einer anderen erfindungsgemäßen Ausführungsform ist die Folie mehrschichtig, beispielsweise dreischichtig, aufgebaut (vgl. Figur 2). Sie besteht dann z. B. aus der erfindungsgemäßen Basisschicht (B), der auf der einen Seite der Basisschicht (B) aufgebrachten Deckschicht (A) sowie einer auf der anderen Seite der Basisschicht (B) aufgebrachten Deckschicht (C). Die Schichten A und C können gleich oder verschieden sein.

Die Folie bzw. die Basisschicht der Folie besteht bevorzugt zu mindestens 55 Gew.-% aus thermoplastischem Polyester (= Komponente I). Dafür geeignet sind z. B. Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Bevorzugt sind Polyester, die zu mindestens 90 Mol-%, besonders bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen Diolen bzw. anderen Dicarbonsäuren. In vorteilhafter Weise können für die Komponente I der Folie bzw. der Basisschicht (B) auch Copolymere oder Mischungen oder Blends aus den genannten Homo- und/oder Copolymeren verwendet werden.

Besonders vorteilhaft ist es für den zuletzt genannten Fall, wenn in der Folie bzw. in der Basisschicht (B) als Komponente I ein Polyester-Copolymer auf Basis von Isophthalsäure und Terephthalsäure oder auf Basis von Terephthalsäure und Naphthalin-2,6-dicarbonsäure verwendet wird. In diesem Fall ist die Herstellbarkeit der Folie gut, und die optischen Eigenschaften der Folie sowie die erzielten Barriereeigenschaften der Folie sind besonders gut. Ein besonderer Vorteil liegt darin, dass bei der Verwendung z. B. eines Polyester-Copolymeren auf Basis von Isophthalsäure und Terephthalsäure die Extrusionstemperatur abgesenkt werden kann, was für die Verarbeitung des MXD6 besonders vorteilhaft ist. Sind für die Extrusion von Polyethylenterephthalat beispielsweise 280 °C erforderlich, so kann im Falle der Verwendung eines Polyester-Copolymeren auf Basis von Isophthalsäure und Terephthalsäure die Extrusionstemperatur auf unterhalb von 260 °C abgesenkt werden. Das MXD6 bleibt dann für die nachfolgende Streckung duktil, was sich z. B. in einer hohen Prozessstabilität und in sehr guten mechanischen Eigenschaften bemerkbar macht.

In diesem Fall enthält die Folie bzw. die Basisschicht (B) der Folie im wesentlichen als Komponente I ein Polyestercopolymeres, das überwiegend aus Isophthalsäure- und Terephthalsäure-Einheiten und aus Ethylenglykol-Einheiten zusammengesetzt ist, und als Komponente II das zuvor genannte erfindungsgemäße Poly(m-xylol-adipinamid) (MXD6). Darüber hinaus sind als Komponente I aber auch Mischungen aus Polyethylenterephthalat und Polyethylenisophthalat bevorzugt.

Die bevorzugten Copolyester (Komponente I), die die gewünschten Eigenschaften der Folie bereitstellen (insbesondere die Optik, gemeinsame Verstreckbarkeit), sind solche, die aus Terephthalat- und Isophthalat-Einheiten und aus Ethylenglykol-Einheiten aufgebaut sind. Der Anteil an Ethylenterephthalat in diesen Copolymeren.beträgt bevorzugt 70 bis 98 Mol-% und der entsprechende Anteil an Ethylenisophthalat 30 bis 2 Mol-%. Hierunter sind wiederum solche Copolyester bevorzugt, bei denen der Anteil an Ethylenterephthalat 76 bis 98 Mol-% und der entsprechende Anteil an Ethylenisophthalat 24 bis 2 Mol-% beträgt, und ganz bevorzugt sind solche Copolyester, bei denen der Anteil an Ethylenterephthalat 80 bis 98 Mol-% und der entsprechende Anteil an Ethylenisophthalat 20 bis 2 Mol-% beträgt.

Geeignete andere aliphatische Diole, die Bestandteile der erfindungsgemäßen Polyester sein können, sind beispielsweise Diethylenglykol, Triethylenglykol, aliphatische Glykole der allgemeinen Formel $HO-(CH_2)_n-OH$, wobei n eine ganze Zahl von 2 bis 6 darstellt, (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht.

Daneben sind auch Bisphenole der Formel $HO-C_6H_4-C_6H_4-OH$ gut geeignet.

Geeignete andere aromatische Dicarbonsäuren, die Bestandteile der erfindungsgemäßen Polyester sein können, sind bevorzugt Benzoldicarbonsäuren, Naphthalin-dicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$-Alkandisäuren besonders geeignet, wobei der Alkanteil geradkettig oder verzweigt sein kann.

Die Herstellung der Polyester kann nach dem bekannten Umesterungsverfahren erfolgen. Dabei geht man von Dicarbonsäureestern und Diolen aus, die mit den üblichen Umesterungskatalysatoren wie Zink-, Calcium-, Lithium- und Mangan-Salzen umgesetzt werden. Die Zwischenprodukte werden dann in Gegenwart allgemein üblicher Polykondensationskatalysatoren wie Antimontrioxid oder Titan-Salzen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus. Weiterhin sind die erfindungsgemäßen Polyester von verschiedenen Herstellern erhältlich.

Erfindungsgemäß enthält die Basisschicht (B) bzw. die Folie als eine weitere Komponente Poly(m-xylol-adipinamid) (MXD6) (= Komponente II) in einer Menge von insbesondere 5 bis 40 Gew.-% und besonders bevorzugt in einer Menge von 5 bis 35 Gew.-%.

Für die Verarbeitung der Polymere hat es sich als günstig erwiesen, wenn das Poly(m-xylol-adipinamid) (MXD6) so ausgewählt wird, dass sich die Viskositäten der jeweiligen Polymerschmelzen nicht zu sehr unterscheiden. Im anderen Fall ist unter Umständen mit zusätzlichen Erhebungen/Vorsprüngen, mit Fließstörungen oder mit Streifenbildung auf der fertigen Folie zu rechnen. Außerdem neigen die Polymeren dann zur Entmischung. Entsprechend den hier durchgeführten Experimenten sollte die Schmelzviskosität des Poly(m-xylol-adipinamid) (MXD6) bevorzugt unterhalb von bestimmten Werten liegen. Sehr gute Resultate im Sinne der vorliegenden Erfindung erhält man, wenn die Schmelzviskostiät für das MXD6 kleiner als 6000 Poise (gemessen in einem Kapillarrheometer von 0,1 mm Durchmesser, einer Länge von 10 mm und einer Schergeschwindigkeit von $\gamma_{Punkt} \geq 100$ s$^{-1}$, Schmelztemperatur 280 °C), bevorzugt kleiner als 5000 Poise und besonders bevorzugt kleiner als 4000 Poise ist.

Entsprechendes gilt auch für die Viskosität des eingesetzten Polyesters. Sehr gute Resultate im Sinne der vorliegenden Erfindung erhält man, wenn die Schmelzviskostiät für den Polyester kleiner als 2400 Poise (gemessen in einem Kapillarrheometer von 0,1 mm Durchmesser, einer Länge von 10 mm und einer Schergeschwindigkeit von $\gamma_{Punkt} \geq 100$ s$^{-1}$, Schmelztemperatur 280 °C), bevorzugt kleiner als 2200 Poise und besonders bevorzugt kleiner als 2000 Poise ist.

Das Poly(m-xylol-adipinamid) (MXD6) wird zweckmäßigerweise entweder als reines Granulat oder als granuliertes Konzentrat (Masterbatch) in die Folie eingearbeitet. Im Falle der Verarbeitung über ein Masterbatch weist dieses eine Konzentration von bevorzugt 10 bis 60 Gew.-% an MXD6 auf. Das Polyestergranulat wird dazu mit dem Poly(m-xylol-adipinamid) (MXD6) bzw. dem Poly(m-xylol-adipinamid) (MXD6)-Masterbatch vorgemischt und anschließend dem Extruder zugeführt. Im Extruder werden die Komponenten weiter vermischt und auf Verarbeitungstemperatur erwärmt. Dabei ist es für das erfindungsgemäße Verfahren zweckmäßig, wenn die Extrusionstemperatur oberhalb der Schmelztemperatur $T_S$ des Poly(m-xylol-adipinamid) (MXD6) liegt, im allgemeinen mindestens 5 °C, vorzugsweise 5 bis 50 °C, insbesondere aber 5 bis 40 °C, über der Schmelztemperatur des Poly(m-xylol-adipinamid) (MXD6). Als eine bevorzugte Extrusionseinheit für die Verarbeitung der Mischung bzw. auch für die Herstellung des Masterbatches aus den Komponenten I und II bietet sich der Zweischneckenextruder an. Zu erwähnen bleibt, dass auch mit dem Einschneckenextruder gute Ergebnisse erzielt werden und damit dieses Prinzip prinzipiell angewendet werden kann.

Die Folie nach der vorliegenden Erfindung ist zumindest einschichtig aufgebaut. In diesem Fall besteht sie dann aus der erfindungsgemäßen Mischung aus Polyester und MXD6 sowie der(den) aufgebrachten metallischen oder keramischen Schicht(en). Darüber hinaus kann die Folie zusätzliche Schichten aufweisen, die mit Deckschichten oder mit Zwischenschichten bezeichnet werden. Typische Folienaufbauten sind dann ABA oder ABC, wobei A und C entsprechende Deckschichten und B die Basisschicht darstellen. Die Deckschichten A und C können gleich oder verschieden sein.

Für die Deckschichten können prinzipiell die gleichen (Polyester-) Polymere verwendet werden wie für die Basisschicht B. In den Deckschichten können aber auch andere Materialien enthalten sein, wobei dann die Deckschichten bevorzugt aus einem Gemisch von Polymeren, Copolymeren oder Homopolymeren bestehen, welches bevorzugt Ethylen-isophthalat-Einheiten und/oder Ethylen-2,6-naphthalat-Einheiten und/oder Ethylen-terephthalat-Einheiten enthält. Bis zu 10 Mol-% der Polymere können aus weiteren Comonomeren bestehen.

In vorteilhafter Weise können für die Deckschichten als weitere Komponenten auch Copolymere oder Mischungen oder Blends aus Homo- und/oder Copolymeren verwendet werden.

Besonders zweckmäßig ist, wenn in den Deckschichten ein Polyester-Copolymer auf Basis von Isophthalsäure und Terephthalsäure verwendet wird. In diesem Fall sind die optischen Eigenschaften der Folie besonders gut, und die Folie ist darüber hinaus besonders gut für die nachfolgende Metallisierung oder keramische Beschichtung geeignet.

In diesem Fall enthält/enthalten die Deckschicht/en der Folie im Wesentlichen ein Polyestercopolymeres, das überwiegend aus Isophthalsäure- und Terephthalsäure-Einheiten und aus Ethylenglykol-Einheiten zusammengesetzt ist. Die restlichen Monomereinheiten stammen aus anderen aliphatischen, cycloaliphatischen oder aromatischen Diolen bzw. Dicarbonsäuren wie sie auch in der Basisschicht vorkommen können. Die bevorzugten Copolyester, die die gewünschten Eigenschaften der Folie bereitstellen (insbesondere die Optik), sind solche, die aus Terephthalat- und Isophthalat-Einheiten und aus Ethylenglykol-Einheiten aufgebaut sind. Der Anteil an Ethylenterephthalat beträgt 40 bis 97 Mol-% und der entsprechende Anteil an Ethylenisophthalat 60 bis 3 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt, und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Daneben kann/können die Deckschicht/en auch Poly(m-xylol-adipinamid) (MXD6) enthalten wie zuvor für die Basisschicht (B) näher beschrieben wurde. Der Gewichtsanteil von Poly(m-xylol-adipinamid) (MXD6) in der/den Deckschicht/en beträgt dabei zweckmäßiger Weise 0,1 bis 80 Gew.-%, bevorzugt 0,3 bis 75 Gew.-% und besonders bevorzugt 0,5 bis 70 Gew.-%, bezogen auf das Gewicht der Deckschicht/en. Die MXD6 enthaltende Deckschicht eignet sich besonders gut für die nachfolgende Metallisierung oder keramische Beschichtung. In einer anderen bevorzugten Ausführungsform der Erfindung enthält/enthalten die Deckschicht/en kein Poly(m-xylol-adipinamid) (MXD6).

Die Dicke der Deckschichten ist bevorzugt größer als 0,3 μm und liegt bevorzugt im Bereich von 0,5 bis 20 μm und besonders bevorzugt im Bereich von 1,0 bis 10 μm.

Die Basisschicht (B) sowie vorhandene Deck- und Zwischenschichten können zusätzlich übliche Additive wie z. B. Stabilisatoren und Antiblockmittel enthalten. Sie werden zweckmäßig dem Polymer bzw. der Polymermischung bereits vor dem Aufschmelzen zugesetzt. Als Stabilisatoren werden beispielsweise Phosphorverbindungen wie Phosphorsäure oder Phosphorsäureester eingesetzt.

Typische Antiblockmittel (in diesem Zusammenhang auch als Pigmente oder Füllstoffe bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Additive können auch Mischungen von zwei oder mehreren verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen z. B. als glykolische Dispersion während der Polykondensation oder über Masterbatche bei der Extrusion zugegeben werden (oder auch als "Direct Additive Addition" [DAA] bei der Extrusion direkt in den Extruder).

Erfindungsgemäß enthält die Folie Füllstoffe in einer Konzentration von bevorzugt 0,02 bis 1 Gew.-%, bevorzugt Füllstoffe in einer Konzentration von 0,04 bis 0,8 Gew.-% und besonders bevorzugt Füllstoffe in einer Konzentration von 0,06 bis 0,6 Gew.-% bezogen auf das Gewicht der Folie (eine detaillierte Beschreibung geeigneter Füllstoffe bzw. Antiblockmittel findet sich beispielsweise in der EP-A-0 602 964).

Beträgt die Konzentration weniger als 0,02 Gew.-%, so kann die Folie blocken und lässt sich dann z. B. nicht mehr wickeln. Beträgt die Konzentration dagegen mehr als 1,0 Gew.-%, so verliert die Folie u. U. ihre hohe Transparenz und wird trüb. Sie kann dann z. B. als Verpackungsfolie nicht mehr verwendet werden.

In einer bevorzugten Ausführungsform der Erfindung beträgt der Füllstoffanteil in den Deckschichten (A oder/ und C) weniger als 0,6 Gew.-%, bevorzugt weniger als 0,5 Gew.-% und besonders bevorzugt weniger als 0,4 Gew.-%, bezogen auf des Gewicht der jeweiligen Deckschicht. In einer besonders bevorzugten Ausführungsform enthält die zu metallisierende bzw. die mit keramischem Material zu beschichtende Deckschicht ganz wenig (kleiner als 0,1 Gew.-%) oder überhaupt keine Füllstoffe.

Die erfindungsgemäße Folie ist z. B. hervorragend geeignet für die Verpackung von Lebensmitteln (z. B. Käse, Fleisch, Kaffee, etc). Die Folie hat eine ausgezeichnete Resistenz zu Lösungsmitteln als auch zu Wasser. Es wurde z. B. gefunden, dass bei einer zweistündigen Extraktion der erfindungsgemäßen Folie in 121 °C Wasserdampfatmosphäre keine messbaren Mengen extrahiert wurden.

Die Gesamtdicke der erfindungsgemäßen Polyesterfolie kann innerhalb weiter Grenzen variieren und richtet sich nach dem beabsichtigten Verwendungszweck. Sie beträgt in der Regel 6 bis 300 µm, vorzugsweise 8 bis 200 µm, besonders bevorzugt 10 bis 100 µm, wobei im Falle aufgebrachter Deckschichten die Basisschicht (B) einen Anteil von vorzugsweise 40 bis 99 % an der Gesamtdicke hat.

Gegenstand der vorliegenden Erfindung ist auch ein Verfahren zur Herstellung der Folie. Das Verfahren umfasst

> a) die Herstellung einer Folie aus Basis- und eventuell vorhandenen Deckschichten durch Extrusion bzw. Coextrusion,
> b) biaxiales Verstrecken der Folie,
> c) Thermofixieren der verstreckten Folie und
> d) Aufbringen der Metall- oder der Keramikschicht off-line auf die thermofixierte Folie.

Zur Herstellung der Folie werden zweckmäßigerweise die jeweiligen Komponenten (Komponente I = Polyesterhomo- oder Polyestercopolymeres oder Mischungen hiervon, Komponente II = Poly(m-xylol-adipinamid) (MXD6) -Granulat) direkt dem Extruder zugeführt. Die Materialien lassen sich bei etwa 250 bis 300 °C extrudieren. Aus verfahrenstechnischer Sicht (Durchmischung der verschiedenen Polymere) hat es sich dabei als besonders günstig erwiesen, wenn die Extrusion der Mischung auf einem Zweischneckenextruder mit Entgasungsmöglichkeit durchgeführt wird (wobei in einer weniger bevorzugten Variante auch ein Einschneckenextruder erfolgreich verwendet werden kann).

Die Polymere für eventuell vorhandene Deckschichten (C und/oder A) werden zweckmäßig über weitere Extruder dem (Koextrusions-) System zugeführt; auch hier ist prinzipiell der Zweischneckenextruder dem Einschneckenextruder vorzuziehen. Die Schmelzen werden in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die biaxiale Streckung wird erfindungsgemäß sequenziell durchgeführt. Dabei wird vorzugsweise erst in Längsrichtung (d. h. in Maschinenrichtung MD) und anschließend in Querrichtung (d. h. senkrecht zur Maschinenrichtung TD) gestreckt. Das Strecken in Längsrichtung lässt sich z. B. mit Hilfe von zwei entsprechend dem angestrebten Streckverhältnis verschieden schnell rotierender Walzen durchführen. Zum Querstrecken benutzt man allgemein einen entsprechenden Kluppenrahmen.

Die Temperatur, bei der die biaxiale Streckung durchgeführt wird, kann in einem relativ großen Bereich variieren und richtet sich nach den gewünschten Eigenschaften der Folie.

Erfindungsgemäß wird die Längsstreckung (MDO) in einem Temperaturbereich von bevorzugt 80 (Aufheiztemperaturen 80 bis 130 °C, abhängig vom Streckverhältnis und dem verwendeten Streckverfahren) bis 130 °C (Strecktemperaturen 80 bis 130 °C, abhängig vom Streckverhältnis und dem verwendeten Streckverfahren) und die Querstreckung in einem Temperaturbereich von bevorzugt 90 (Beginn der Streckung) bis 140 °C (Ende der Streckung) durchgeführt.

Das Längsstreckverhältnis ist erfindungsgemäß größer als 3,0 und liegt bevorzugt im Bereich von 3,1:1 bis 5,0:1, bevorzugt im Bereich von 3,2:1 bis 4,9:1 und besonders bevorzugt im Bereich von 3,3:1 bis 4,8:1. Das Querstreckverhältnis ist erfindungsgemäß größer als 3,0 und liegt bevorzugt im Bereich von 3,2:1 bis 5,0:1, bevorzugt im Bereich von 3,3:1 bis 4,8:1 und besonders bevorzugt im Bereich von 3,4:1 1 bis 4,6:1.

Die Längsorientierung der Folie kann standardmäßig z. B. mit Hilfe von zwei entsprechend dem angestrebten Streckverhältnis verschieden schnell rotierender Walzen durchgeführt werden. In diesem Fall spricht man von einer Einspaltstreckung. Bei dieser Streckung wird der Film auf mehreren, hintereinander geschalteten Vorheizwalzen auf die Strecktemperatur aufgeheizt und mittels zwei verschieden schnell laufender Walzen um das gewünschte Streckverhältnis $\lambda_{MD}$ gestreckt (vgl. Figur 3). Die Temperatur der Folie bei der Verstreckung liegt bevorzugt im Bereich von 80 bis 100 °C und ist abhängig von dem Material (Mischungsverhältnis von z. B. PET und MXD6), das gestreckt wird, und dem Streckverhältnis $\lambda_{MD}$. Die Temperatur der Folie kann z. B. mittels IR gemessen werden. Entsprechend beträgt die Aufheiztemperatur ebenfalls bevorzugt 80 bis 100 °C und richtet sich im Wesentlichen nach der eingestellten Strecktemperatur. In Figur 3 ist die Situation beispielsweise für eine Anordnung von 5 Aufheizwalzen (1-5) und zwei Streckwalzen (6-7) dargestellt. Bei einer Strecktemperatur von 90 °C betragen die Temperaturen der Aufheizwalzen z. B. 70, 70, 80, 85 und 90 °C.

Bevorzugt wird die Längsorientierung der Folie in einem mehrstufigen, besonders bevorzugt in einem zweistufigen Prozess z. B. mit Hilfe mehrerer, entsprechend dem angestrebten Streckverhältnis verschieden schnell laufender Walzen durchgeführt. Im Fall der Zweistufenstreckung wird bevorzugt die Folie nach dem in der EP-A-0 049 108 veröffentlichten Verfahren orientiert (vgl. Figur 4, entspricht der Figur 1 aus der EP-A-0 049 108). Hierbei wird die Folie auf mehreren, hintereinander geschalteten Vorheizwalzen auf die Strecktemperatur aufgeheizt und mittels mehrerer (beim zweistufigen Streckprozess nach Figur 1 der EP-A-0 049 108 erfolgt die Streckung mit Hilfe von 3 Walzen) verschieden schnell laufender Walzen um das gewünschte Streckverhältnis $\lambda_{MD}$ gestreckt (vgl. Figur 4). Das Längsstreckverhältnis $\lambda_{MD}$ ($\lambda_{MD}$ entspricht dem Gesamtstreckverhältnis $\lambda_1 \cdot \lambda_2$ der EP-A-0 049 108) ist erfindungsgemäß größer als 3,0 und liegt bevorzugt im Bereich von 3,1:1 bis 5,0:1, bevorzugt im Bereich von 3,2:1 bis 4,9:1 und besonders bevorzugt im Bereich von 3,3:1 bis 4,8:1. Die Temperatur der Folie bei der Verstreckung liegt bevorzugt im Bereich von 80 bis 130 °C und ist abhängig von dem Material (Mischungsverhältnis von z. B. PET und MXD6), das gestreckt wird, und dem Streckverhältnis $\lambda_{MD}$. Entsprechend beträgt die Aufheiztemperatur ebenfalls 80 bis 130 °C und richtet sich im Wesentlichen nach der eingestellten Strecktemperatur. In Figur 4 ist die Situation für eine Anordnung von 5 Aufheizwalzen (1-5) und drei Streckwalzen (6-8) dargestellt. Bei einer Strecktemperatur von 110 °C betragen die Temperaturen der Aufheizwalzen z. B. 70, 80, 85, 90, 105, 110 und 110 °C.

Bei der nachfolgenden Thermofixierung wird die Folie über eine Zeitdauer von etwa 0,1 bis 10 s bei einer Temperatur von ca. 150 bis 250 °C gehalten. Anschließend wird die Folie in üblicher Weise aufgewickelt.

Vor der Querstreckung kann eine oder beide Oberfläche(n) der Folie nach den bekannten Verfahren in-line beschichtet werden. Die in-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Die biaxial verstreckte und thermofixierte Polyesterfolie kann weiterhin vor dem Aufbringen der metallischen oder der keramischen Schicht auf einer oder beiden Seite(n) corona-, flamm-oder plasmabehandelt werden. Die Behandlungsintensität ist so gewählt, dass die Oberflächenspannung der Folie im allgemeinen über 45 mN/m liegt.

Das Aufbringen der Metallschicht bzw. der keramischen Schicht erfolgt zweckmäßig auf allgemein üblichen industriellen Anlagen. Metallschichten aus Aluminium werden üblicherweise durch Bedampfen hergestellt (z. B. Verdampfung mittels Schiffchen), während keramische Schichten auch mit Elektronenstrahlverfahren oder durch Aufsputtern erzeugt werden. Die Verfahrensparameter der Anlage beim Aufbringen der Metallschicht bzw. der keramischen Schicht auf die Folien entsprechen den Standardbedingungen.

Die Metallisierung der Folien wird vorzugsweise so durchgeführt, dass die optische Dichte der metallisierten Folien im üblichen Bereich von ca. 2,2 bis 3,2 liegt. Das Aufbringen der keramischen Schicht auf die Folie wird so durchgeführt, dass die Schichtstärke der Oxidschicht vorzugsweise im Bereich von 10 bis 200 nm liegt. Die Bahngeschwindigkeit der zu beschichtenden Folie liegt bei allen Einstellungen bevorzugt zwischen 2 und 10 m/s.

Die Metallschicht besteht bevorzugt aus Aluminium. Doch sind auch andere Materialien geeignet, die sich in Form einer dünnen, zusammenhängenden Schicht aufbringen lassen. Insbesondere ist z. B. Silizium geeignet, welches im Vergleich zu Aluminium eine transparente Barriereschicht ergibt. Die keramische Schicht besteht bevorzugt aus Oxiden von Elementen der II., III. oder IV. Hauptgruppe des Periodensystems, insbesondere Oxide des Magnesiums, Aluminiums oder Siliziums oder deren Mischungen. Allgemein werden bevorzugt solche metallischen oder keramischen Materialien verwendet, die bei vermindertem Druck bzw. im Vakuum aufgebracht werden können (= Vakuumdünnschichtverfahren).

Die keramische Schicht aus $Al_2O_3$ oder aus $SiO_x$ wird dabei so auf die Folie aufgebracht, dass die Zahl x zwischen 0,9 und 2 liegt. Bevorzugt wird hierbei Aluminium unter Zufuhr von Sauerstoff oder Siliziummonoxid (SiO), gegebenenfalls unter Zufuhr von Sauerstoff, verdampft. Die Schicht aus $SiO_x$ kann gegebenenfalls auch durch Plasmapolymerisation (z. B. über Hexamethyldisiloxan, $CH_4$) hergestellt werden.

Bei einer anderen bevorzugten Variante ist das x der keramischen Schicht aus $SiO_x$ eine Zahl bevorzugt zwischen 1,3 und 2, insbesondere zwischen 1,5 und 1,8. Eine derart beschichtete Folie zeichnet sich neben einer weiterhin guten Barriere (auch nach der Sterilisierung) insbesondere durch eine geringe Verfärbung (Gelbfärbung) aus.

Die keramischen Schichten mit $SiO_x$ können beispielsweise mit Verfahren der Vakuumdünnschicht-Technik, bevorzugt durch Elektronenstrahlverdampfen, auf die Folie abgeschieden werden, wobei die keramische Schicht in jedem Fall mittels einer weiteren Folie bzw. von einem Kaschierkleber oder beispielsweise mittels einem ORMOCER und Kaschierkleber abgedeckt ist.

Mittels eines an sich bekannten Vakuumdünnschichtverfahrens wird durch gleichzeitiges Verdampfen von Siliziumdioxid ($SiO_2$) und metallischem Silizium aus einer einzigen Verdampfungsquelle, d. h. einer Mischung aus $SiO_2$ und Si, im Vakuum eine keramische Schicht aus $SiO_x$ niedergeschlagen, wobei x eine Zahl zwischen bevorzugt 0,9 und 2 ist.

Zur Herstellung einer keramischen Schicht aus $SiO_x$, wobei x eine Zahl zwischen 1,3 und 2 ist, können dem $SiO_2$ als zu verdampfende Materialien weitere Zusätze wie $Al_2O_3$, $B_2O_3$ und MgO in Mengen bis zu 50 Mol-%, vorzugsweise 5 bis 30 Mol-%, jeweils bezogen auf das $SiO_2$, zugesetzt werden.

Weitere Zusätze, die den zu verdampfenden Materialien zugegeben werden können, sind beispielsweise Al, B und/oder Mg in reiner Form oder als Si-Legierung, in Mengen bis zu 50 Mol-%, vorzugsweise 5 bis 30 Mol-%, jeweils bezogen auf das Si.

Das Mengenverhältnis von $SiO_2$, $Al_2O_3$, $B_2O_3$ und MgO zu Si, Al, B und Mg wird beispielsweise so eingestellt, dass sich stöchiometrisch eine Sauerstoffmangel von bevorzugt 10 bis 30 %, bezogen auf die Summe der reinen Oxide im abgedampften Material, ergibt.

Bei der Herstellung einer kcramischcn Schicht aus $SiO_x$, wobei x eine Zahl zwischen 0,9 und 1,2 ist, kann anstelle einer gleichzeitigen Verdampfung von $SiO_2$ und Si Siliziummonoxid (SiO) verdampft werden.

Eine Plasmavorbehandlung der PET-Folie vor der $SiO_x$-Beschichtung führt zu einer weiteren Verbesserung der Barriereeigenschaften.

Der letztlich für Verpackungszwecke bevorzugt eingesetzte Folienverbund enthält neben der mit $SiO_x$ beschichteten Polyesterfolie je nach Verwendungszweck weitere Folien, beispielsweise Folien aus PET oder aus orientiertem PA (OPA); oder der Folienverbund kann zur Steuerung der Siegeleigenschaften mit einer Siegelschicht aus beispielsweise PP oder PE beschichtet sein. Das Zusammenfügen der einzelnen Folien zu einem Folienverbund erfolgt bevorzugt mittels Kaschierklebern auf Basis von Polyurethan.

Der Glanz der unbehandelten (d. h. der nicht metallisierten, bzw. nicht keramisch beschichteten) Folienoberflächen ist bevorzugt größer als 80 bei einem Einstrahlwinkel von 20°. In einer bevorzugten Ausführungsform beträgt der Glanz der Folienoberflächen mehr als 100 und in einer besonders bevorzugten Ausführungsform mehr als 120.

Die Trübung der nicht beschichteten (unbehandelten) Folie ist bevorzugt kleiner als 20 %. In einer bevorzugten Ausführungsform beträgt die Trübung der nicht beschichteten Folie weniger als 15 % und in einer besonders bevorzugten Ausführungsform weniger als 10 %. Durch die geringe Trübung eignet sich die Folie insbesondere für die Verpackungsanwendung (gilt insbesondere für den Fall, dass die Folie mit einer transparenten Barriereschicht beschichtet wurde).

Ein weiterer Vorteil der Erfindung besteht darin, dass die Herstellungskosten der erfindungsgemäßen Folie nicht wesentlich über denen einer Folie aus Standardpolyesterrohstoffen liegen. Daneben ist bei der Herstellung der Folie gewährleistet, dass Verschnittmaterial, das bei der Folienherstellung im Betrieb immanent anfällt, als Regenerat in einer Menge von bevorzugt 5 bis 60 Gew.-%, insbesondere 10 bis 50 Gew.-%, jeweils bezogen auf das Gesamtgewicht der Folie, wieder für die Folienherstellung verwendet werden kann, ohne dass dabei die physikalischen Eigenschaften der Folie nennenswert negativ beeinflusst werden.

Die erfindungsgemäße Folie eignet sich insbesondere zum Verpacken von Nahrungs- und Genussmitteln. Daneben eignet sie sich hervorragend zum Metallisieren oder Vakuumbeschichten mit keramischen Substanzen. Sie zeichnet sich durch hervorragende Barriereeigenschaften gegenüber Gasen wie z. B. Sauerstoff und $CO_2$ aus.

Die nachstehende Tabelle (Tabelle 1) fasst die wichtigsten erfindungsgemäßen und bevorzugten Folieneigenschaften zusammen.

## Tabelle 1

| Folie bzw. Basisschicht | Bevorzugter Bereich | Insbesondere bevorzugter Bereich | Ganz besonders bevorzugter Bereich | Einheit | Messmethode |
|---|---|---|---|---|---|
| Komponente I (= thermoplastischer Polyester) | 55 bis 95 | 60 bis 95 | 65 bis 95 | Gew.-% | |
| Komponente II (= Poly(m-xylol-adipinamid) (MXD6) | 5 bis 45 | 5 bis 40 | 5 bis 35 | Gew.-% | |
| Schmelzviskosität des verwendeten MXD6 | < 6000 | < 5000 | < 4000 | Poise | im Kapillarheometer, 280 °C |
| Biaxiale Orientierung | sequenziell | + erst MD, dann TD | + MD, zweistufig | | |
| Längsstreckung, Streckverhältnis $\lambda_{MD}$ | 3,1:1 bis 5,0:1 | 3,2:1 bis 4,9:1 | 3,3: 1 bis 4,8:1 | | |
| Querstreckung, Streckverhältnis $\lambda_{TD}$ | 3,2:1 bis 5,0:1 | 3,3:1 bis 4,8:1 | 3,4:1 bis 4,6:1 | | |
| Füllstoffkonzentration | 0,02 bis 1 | 0,04 bis 0,8 | 0,06 bis 0,6 | Gew.-% | |
| **Folieneigenschaften** | | | | | |
| OTR einer 12 µm dicken metallisierten Folie[H1] | < 0,5 | < 0,45 | < 0,4 | $cm^3/(m^2 \cdot bar \cdot d)$ | DIN 53 380, Teil 3 |
| OTR einer 12 µm dicken keramisch beschichteten Folie | < 1,0 | < 0,95 | < 0,9 | $cm^3/(m^2 \cdot bar \cdot d)$ | DIN 53 380, Teil 3 |
| Dicke der Folie | 6 bis 300 | 8 bis 200 | 10 bis 100 | µm | |
| Glanz der unbeschichteten Folie (Messwinkel = 20°) | > 80 | > 100 | > 120 | - | DIN 67 530 |
| Trübung der unbeschichteten Folie | < 20 | < 15 | < 10 | % | ASTM-D 1003-52 |
| E-Modul der Folie, in MD-Richtung | > 3500 | > 4000 | > 4500 | $N/mm^2$ | DIN 53 457 |
| in TD-Richtung | > 3500 | > 4000 | > 4500 | | |
| Reißfestigkeit der Folie, in MD-Richtung | > 160 | > 170 | > 180 | $N/mm^2$ | DIN 53 455 |
| in TD-Richtung | > 200 | > 210 | > 220 | | |

EP 1 609 814 A1

Messmethoden

Zur Charakterisierung der Rohstoffe und der Folien wurden die folgenden Methoden benutzt:
DIN = Deutsches Institut für Normung,
ASTM = American Society for Testing and Materials

### (1) Sauerstoffdurchlässigkeit (OTR = Oxygen Transmission Rate)

Die Messung der Sauerstoffbarriere erfolgte mit einem OXTRAN® 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an 12 μm dicker Folie.

### (2) Trübung

Die Trübung der unbeschichteten Folie wurde nach ASTM-D 1003-52 bestimmt.

### (3) SV-Wert (standard viscosity)

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV \text{ (DCE)} = 6{,}907 \cdot 10^{-4} \text{ SV (DCE)} + 0{,}063096$$

### (4) Glanz

Der Glanz der unbeschichteten Folie wurde nach DIN 67530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden. Die in den Beispielen angegebenen Messwerte für den Glanz wurden bei einem Einstrahlwinkel von 20° gemessen.

### (5) Rauigkeit

Die Rauigkeit $R_a$ der unbeschichteten Folie wurde nach DIN 4768 bei einem Cut-off von 0,25 mm bestimmt. Es wurde dabei nicht auf einer Glasplatte, sondern im Ring gemessen. Bei der Ringmethode wird die Folie in einen Ring eingespannt, so dass keine der beiden Oberflächen eine dritte Oberfläche (z. B. Glas) berührt.

### (6) E-Modul

Der E-Modul wird gemäß DIN 53 457 bzw. ASTM 882 bestimmt

### (7) Reißfestigkeit, Reißdehnung

Die Reißfestigkeit und die Reißdehnung werden nach DIN 53 455 bestimmt.

### Beispiele

Die folgenden Beispiele illustrieren die Erfindung. Die verwendeten Produkte (Marken und Herstellerfirma) sind jeweils nur einmal angegeben und beziehen sich dann auch auf die nachfolgenden Beispiele.

### Beispiel 1

Chips aus Polyethylenterephthalat (hergestellt über das Umesterungsverfahren mit Mn als Umesterungskatalysator, Mn-Konzentration im Polymer: 100 ppm; bei einer Temperatur von 150 °C auf eine Restfeuchte von unterhalb 100 ppm getrocknet) und Poly(m-xylol-adipinamid) (MXD6), ebenfalls bei einer Temperatur von 150 °C getrocknet, wurden in einem Mischungsverhältnis von 90 : 10 dem Extruder (Zweischneckenextruder mit zwei Entgasungsmöglichkeiten) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten. Die Folie wurde anschließend einseitig in einem industriellen Metallisierer (Topmet, Lybold-Heraeus, DE) mit Aluminium im Vakuum bedampft. Die Beschichtungsgeschwindigkeit betrug 5 m/s.

Folienaufbau

| 10 Gew.-% | Poly(m-xylol-adipinamid) (MXD6) der Fa. Mitsubishi Gas Chemical Co., Produktname Nylon® MXD6 6007, mit einer Schmelzviskosität von 5000 Poise |
| 80 Gew.-% | Polyethylenterephthalat 4023 der Fa. KoSa, Deutschland, mit einem SV-Wert von 800 |
| 10 Gew.-% | Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 µm |

Die Herstellungsbedingungen in den einzelnen Verfahrensschritten sind wie folgt:

| Extrusion | max. Temperatur | | 280 °C |
| | Temperatur der Abzugswalze | | 25 °C |
| Längsstreckung | Längsstreckverhältnis | $\lambda_{MDO}$ | 4,0 |
| | | $\lambda_1$ | 1,75 |
| | Strecktemperatur beim | 1. Strecken | 115 °C |
| | | $\lambda_2$ | 2,3 |
| | Strecktemperatur beim | 2. Strecken | 113 °C |
| | Aufheiztemperatur | 1. Walze | 70 °C |
| | | letzte Walze | 115 °C |
| Querstreckung | Strecktemperatur | Anfang | 110 °C |
| | | Ende | 134 °C |
| | Querstreckverhältnis | | 3,8 |
| Fixierung | Temperatur | | 230 °C |
| | Dauer | | 3 s |

Die Oberflächen der Folie hatten den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten).

**Beispiel 2**

Chips aus einem Copolyester aufgebaut aus Terephthalat- und Isophthalat-Einheiten und aus Ethylenglykol-Einheiten (der Anteil an Ethylenterephthalat beträgt 90 Mol-% und der Anteil an Ethylenisophthalat 10 Mol-%, hergestellt über das Umesterungsverfahren mit Mn als Umesterungskatalysator, Mn-Konzentration im Polymer: 100 ppm; bei einer Temperatur von 100 °C auf eine Restfeuchte von unterhalb 100 ppm getrocknet) und Poly(m-xylol-adipinamid) (MXD6), ebenfalls bei einer Temperatur von 100 °C getrocknet, wurden in einem Mischungsverhältnis von 90:10 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten. Die Folie wurde anschließend einseitig in einem industriellen Metallisierer mit Aluminium im Vakuum bedampft. Die Beschichtungsgeschwindigkeit betrug 5 m/s.

Folienaufbau

| 10 Gew.-% | Poly(m-xylol-adipinamid) (MXD6) der Fa. Mitsubishi Gas Chemical Co., Produktname Nylon MXD6 6007, mit einer Schmelzviskosität von 5000 Poise |
| 80 Gew.-% | Polyestercopolymeres (Ethylenterephthalat 90 Mol-%, Ethylenisophthalat 10 Mol-%, Fa. KoSa, Deutschland) mit einem SV-Wert von 800 |
| 10 Gew.-% | Polyesterrohstoff von Fa. KoSa mit einem SV-Wert von 800, bestehend aus 99 Gew.-% Polyestercopolymeres (Ethylenterephthalat 90 Mol-%, Ethylenisophthalat 10 Mol-% der Fa. KoSa) und 1,0 Gew.-% Kieselsäurepartikel (Sylysia® 320 von der Fa. Fuji/Japan) mit einem $d_{50}$-Wert von 2,5 µm |

Die Herstellungsbedingungen in den einzelnen Verfahrensschritten sind wie folgt:

| Extrusion | max. Temperatur | | 270 °C |
|---|---|---|---|
| | Temperatur der Abzugswalze | | 25 °C |
| Längsstreckung | Längsstreckverhältnis | $\lambda_{MDO}$ | 4,2 |
| | | $\lambda_1$ | 1,83 |
| | Strecktemperatur beim | 1. Strecken | 112°C |
| | | $\lambda_2$ | 2,3 |
| | Strecktemperatur beim | 2. Strecken | 106 °C |
| | Aufheiztemperatur | 1. Walze | 70 °C |
| | | letzte Walze | 112 °C |
| Querstreckung | Strecktemperatur | Anfang | 105 °C |
| | | Ende | 127 °C |
| | Querstreckverhältnis | | 3,8 |
| Fixierung | Temperatur | | 225 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten (u. a. gute Wickelqualität wie z. B. keine Blockpickel, keine Längsrillen, keine hohen Kanten).

**Beispiel 3**

Im Vergleich zu Beispiel 1 wurde das Mischungsverhältnis von MXD6 und Polyethylenterephthalat geändert. In diesem Beispiel wurden Chips aus Polyethylenterephthalat und Poly(m-xylol-adipinamid) (MXD6) getrocknet, in einem Mischungsverhältnis von 85:15 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten. Die Folie wurde anschließend einseitig in einem industriellen Metallisierer mit Aluminium im Vakuum bedampft. Die Beschichtungsgeschwindigkeit betrug 5 m/s.

Folienaufbau

| 15 Gew.-% | Poly(m-xylol-adipinamid) (MXD6) der Fa. Mitsubishi Gas Chemical Co., Produktname Nylon MXD6 6007, mit einer Schmelzviskosität von 5000 Poise |
| 75 Gew.-% | Polyethylenterephthalat 4023 der Fa. KoSa, Deutschland, mit einem SV-Wert von 800 |
| 10 Gew.-% | Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 µm |

Die Herstellungsbedingungen in den einzelnen Verfahrensschritten sind wie folgt:

| Extrusion | max. Temperatur | | 280 °C |
|---|---|---|---|
| | Temperatur der Abzugswalze | | 25 °C |
| Längsstreckung | Längsstreckverhältnis | $\lambda_{MDO}$ | 3,8 |
| | | $\lambda_1$ | 1,65 |
| | Strecktemperatur beim | 1. Strecken | 115 °C |
| | | $\lambda_2$ | 2,3 |
| | Strecktemperatur beim | 2. Strecken | 113 °C |
| | Aufheiztemperatur | 1. Walze | 70 °C |
| | | letzte Walze | 115°C |
| Querstreckung | Strecktemperatur | Anfang | 110 °C |
| | | Ende | 137 °C |
| | Querstreckverhältnis | | 3,8 |
| Fixierung | Temperatur | | 230 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten wie in den Beispielen zuvor.

**Beispiel 4**

Im Vergleich zu Beispiel 1 wurde das Mischungsverhältnis von MXD6 und Polyethylenterephthalat geändert. In diesem Beispiel wurden Chips aus Polyethylenterephthalat und Poly(m-xylol-adipinamid) (MXD6) getrocknet, in einem Mischungsverhältnis von 75:25 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten. Die Folie wurde anschließend einseitig in einem industriellen Metallisierer mit Aluminium im Vakuum bedampft. Die Beschichtungsgeschwindigkeit betrug 5 m/s.

Folienaufbau

25 Gew.-%  Poly(m-xylol-adipinamid) (MXD6) der Fa. Mitsubishi Gas Chemical Co., Produktname Nylon MXD6 6007, mit einer Schmelzviskosität von 5000 Poise

65 Gew.-%  Polyethylenterephthalat 4023 der Fa. KoSa, Deutschland, mit einem SV-Wert von 800

10 Gew.-%  Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 µm

Die Herstellungsbedingungen in den einzelnen Verfahrensschritten sind wie folgt:

| Extrusion | max. Temperatur | | 280 °C |
|---|---|---|---|
| | Temperatur der Abzugswalze | | 25 °C |
| Längsstreckung | Längsstreckverhältnis | $\lambda_{MDO}$ | 3,7 |
| | | $\lambda_1$ | 1,61 |
| | Strecktemperatur beim | 1. Strecken | 118 °C |
| | | $\lambda_2$ | 2,3 |
| | Strecktemperatur beim | 2. Strecken | 115 °C |
| | Aufheiztemperatur | 1. Walze | 70 °C |
| | | letzte Walze | 118°C |
| Querstreckung | Strecktemperatur | Anfang | 110 °C |

(fortgesetzt)

| | | Ende | 139 °C |
|---|---|---|---|
| | Querstreckverhältnis | | 3,8 |
| Fixierung | Temperatur | | 230 °C |
| | Dauer | | 3 s |

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten wie in den Beispielen zuvor.

**Beispiel 5**

Im Vergleich zu Beispiel 1 wurde das Mischungsverhältnis von MXD6 und Polyethylenterephthalat geändert. In diesem Beispiel wurden Chips aus Polyethylenterephthalat und Poly(m-xylol-adipinamid) (MXD6) in einem Mischungsverhältnis von 60:40 dem Extruder (Zweischneckenextruder) zugeführt und durch Extrusion eine einschichtige Folie hergestellt. Die Folie wurde in Längsrichtung (zweistufig) und in Querrichtung verstreckt, und es wurde eine transparente Folie mit einer Gesamtdicke von 12 µm erhalten. Die Folie wurde anschließend einseitig in einem industriellen Metallisierer mit Aluminium im Vakuum bedampft. Die Beschichtungsgeschwindigkeit betrug 5m/s.

Folienaufbau

40 Gew.-%    Poly(m-xylol-adipinamid) (MXD6) der Fa. Mitsubishi Gas Chemical Co., Produktname Nylon MXD6 6007, mit einer Schmelzviskosität von 5000 Poise

50 Gew.-%    Polyethylenterephthalat 4023 der Fa. KoSa, Deutschland, mit einem SV-Wert von 800

10 Gew.-%    Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/ Japan) mit einem $d_{50}$-Wert von 2,5 µm

Die Herstellungsbedingungen in den einzelnen Verfahrensschritten sind wie folgt:

| | | | |
|---|---|---|---|
| Extrusion | max. Temperatur | | 280 °C |
| | Temperatur der Abzugswalze | | 25 °C |
| Längsstreckung | Längsstreckverhältnis | $\lambda_{MDO}$ | 3,6 |
| | | $\lambda_1$ | 1,6 |
| | Strecktemperatur beim | 1. Strecken | 120 °C |
| | | $\lambda_2$ | 2,25 |
| | Strecktemperatur beim | 2. Strecken | 118 °C |
| | Aufheiztemperatur | 1. Walze | 70 °C |
| | | letzte Walze | 120 °C |
| Querstreckung | Strecktemperatur | Anfang | 110 °C |
| | | Ende | 140 °C |
| | Querstreckverhältnis | | 3,7 |
| Fixierung | Temperatur | | 230 °C |

(fortgesetzt)

| | Dauer | | 3 s |
|---|---|---|---|

Die Oberfläche der Folie hatte den geforderten hohen Glanz, die Folie die geforderte niedrige Trübung, die geforderte niedrige OTR und die geforderten hohen mechanischen Festigkeiten. Weiterhin konnte die Folie sehr gut, d. h. abrissfrei, hergestellt werden und zeigte außerdem das gewünschte Verarbeitungsverhalten wie in den Beispielen zuvor.

**Beispiel 6**

Im Vergleich zu Beispiel 1 wird jetzt durch Koextrusion eine dreischichtige Folie mit ABC-Aufbau hergestellt. Die Zusammensetzung der Basisschicht (B) wurde dabei gegenüber Beispiel 1 nicht geändert. Dazu wurden des weiteren Chips aus Polyethylenterephthalat und einem Füller dem Extruder (Zweischneckenextruder) für die Deckschichten (A und C) zugeführt. Es wurde eine transparente, dreischichtige Folie mit ABC-Aufbau und einer Gesamtdicke von 12 μm erhalten. Die Dicke der Deckschichten (A) und (C) betrug jeweils 1,0 μm. Die Deckschicht (A) der Folie wurde anschließend in einem industriellen Metallisierer mit Aluminium im Vakuum bedampft. Die Beschichtungsgeschwindigkeit betrug 5 m/s.

Deckschicht (A):

20 Gew.-%    Poly(m-xylol-adipinamid) (MXD6) der Fa. Mitsubishi Gas Chemical Co., Produktname Nylon MXD6 6007, mit einer Schmelzviskosität von 5000 Poise
80 Gew.-%    Polyethylenterephthalat 4023 der Fa. KoSa, Deutschland, mit einem SV-Wert von 800

Deckschicht (C):

80 Gew.-%    Polyethylenterephthalat 4023 der Fa. KoSa, Deutschland, mit einem SV-Wert von 800
20 Gew.-%    Polyesterrohstoff von Fa. KoSa mit einem SV-Wert von 800, bestehend aus 99 Gew.-% Polyethylenterephthalat 4023 der Fa. KoSa und 1,0 Gew.-% Kieselsäurepartikel (Sylysia® 320 von der Fa. Fuji/Japan) mit einem $d_{50}$-Wert von 2,5 μm

Die Herstellungsbedingungen in den einzelnen Verfahrensschritten waren ähnlich zu denjenigen wie in Beispiel 1. Die Folie hatte die geforderte niedrige Trübung und die geforderte niedrige OTR. Weiterhin konnte die Folie sehr gut, d. h. abrissfrei, hergestellt werden und zeigte außerdem das gewünschte Verarbeitungsverhalten.

**Vergleichsbeispiel**

Es wurde eine Folie entsprechend Beispiel 1 der JP 2001-001399 hergestellt. Die Rauigkeitswerte dieser Folie sind zu hoch, der Glanz der Folie und insbesondere die mechanischen Eigenschaften liegen nicht im erfindungsgemäßen Bereich. Außerdem zeigt die aufgewickelt Rolle Blockpickel (Punkte, auf denen die Folienlagen verblockt sind) infolge nichtvorhandener Füllstoffe innerhalb der Folie.
Die Eigenschaften und der Aufbau der gemäß den Beispielen und den Vergleichsbeispielen (VB) hergestellten Folien sind in Tabelle 2 zusammengestellt.

**Tabelle 2**

| | | Folien-dicke | Folien-aufbau | MXD6-Anteil in Folie/Basis-schicht | Trübung (unbe-schichtet) | Glanz beider Oberflächen (unbeschichtet) | E-Modul in | | Reißfestigkeit | | Reißdehnung | | OTR der barrierebe-schichteten Folie | Rauigkeit der beiden Oberflächen | Reibung der beiden Oberflächen |
|---|---|---|---|---|---|---|---|---|---|---|---|---|---|---|---|
| | | | | | | | MDO | TDO | MDO | TDO | MDO | TDO | | | |
| | | µm | | % | % | | N/mm² | | N/mm² | | % | | cm³/m²·bar·d | µm | % |
| B e i s p i e l e | 1 | 12 | B | 10 | 5 | 130 | 4800 | 5200 | 170 | 220 | 100 | 80 | 0,3 | 70 | 0,4 |
| | 2 | 12 | B (IPA) | 10 | 4 | 140 | 4600 | 5000 | 160 | 200 | 120 | 90 | 0,37 | 60 | 0,45 |
| | 3 | 12 | B | 15 | 6 | 130 | 4900 | 5400 | 180 | 230 | 120 | 95 | 0,28 | 75 | 0,4 |
| | 4 | 12 | B | 25 | 7 | 130 | 4900 | 5500 | 190 | 230 | 120 | 95 | 0,2 | 75 | 0,4 |
| | 5 | 12 | B | 40 | 9 | 130 | 5100 | 6000 | 200 | 230 | 120 | 95 | 0,15 | 80 | 0,4 |
| | 6 | 12 | ABC | 10 | 3,8 | 150 | 4600 | 5000 | 160 | 200 | 120 | 90 | 0,23 | 60 | 0,45 |
| VB | 1 | 12 | B | 20 | 8 | 75 | 3300 | 3400 | 150 | 160 | 130 | 100 | 22 | 100 | >1 |

EP 1 609 814 A1

**Patentansprüche**

1. Biaxial orientierte Polyesterfolie, welche

   a) Poly(m-xylol-adipinamid) (MXD6) enthält,
   b) einen Elastizitätsmodul (E-Modul) von mindestens 3500 N/mm$^2$ in beiden Orientierungsrichtungen aufweist und
   c) zumindest auf einer Oberfläche metallisiert oder keramisch beschichtet ist.

2. Polyesterfolie nach Anspruch 1, **dadurch gekennzeichnet, dass** sie Füllstoffe enthält.

3. Polyesterfolie nach Anspruch 1 oder 2, **dadurch gekennzeichnet, dass** sie 5-45 Gew.-% Poly(m-xylol-adipinamid) enthält.

4. Polyesterfolie nach einem oder mehreren der Ansprüche 1 bis 3, **dadurch gekennzeichnet, dass** die Schmelzviskosität des Poly(m-xylol-adipinamid) kleiner als 6000 Poise ist.

5. Polyesterfolie nach einem oder mehreren der Ansprüche 1 bis 4, **dadurch gekennzeichnet, dass** sie 0,02 bis 1 Gew.-% Füllstoffe enthält.

6. Polyesterfolie nach einem oder mehreren der Ansprüche 1 bis 5, **dadurch gekennzeichnet, dass** sie mindestens 55 Gew.-% thermoplastischen Polyester enthält.

7. Polyesterfolie nach einem oder mehreren der Ansprüche 1 bis 6, **dadurch gekennzeichnet, dass** der thermoplastische Polyester Terephthalsäure- und/oder Isophthalsäure- und/oder Naphthalin-2,6-dicarbonsäure-Einheiten aufweist.

8. Polyesterfolie nach einem oder mehreren der Ansprüche 1 bis 7, **dadurch gekennzeichnet, dass** der thermoplastische Polyester Isophthalsäure-, Terephthalsäure-und Ethylenglykol-Einheiten aufweist.

9. Polyesterfolie nach einem oder mehreren der Ansprüche 1 bis 8, **dadurch gekennzeichnet, dass** als thermoplastischer Polyester Polyethylenterephthalat verwendet wird.

10. Polyesterfolie nach einem oder mehreren der Ansprüche 1 bis 9, **dadurch gekennzeichnet, dass** sie aus einer Basisschicht (B) und aus einer oder zwei Deckschichten (A) und (C) besteht, wobei die Deckschichten (A) und (C) gleich oder verschieden sein können.

11. Polyesterfolie nach einem oder mehreren der Ansprüche 1 bis 10, **dadurch gekennzeichnet, dass** die Deckschichten (A) und/oder (C) den für die Basisschicht (B) verwendeten thermoplastischen Polyester enthalten.

12. Polyesterfolie nach einem oder mehreren der Ansprüche 1 bis 11, **dadurch gekennzeichnet, dass** als Polymer für die Deckschichten (A) und/oder (C) Polyethylenterephthalat oder ein Polyestercopolymer verwendet wird, das Isophthalsäure-, Terephthalsäure- und Ethylenglykol-Einheiten aufweist.

13. Polyesterfolie nach einem oder mehreren der Ansprüche 1 bis 12, **dadurch gekennzeichnet, dass** sie mit Aluminium metallisiert ist.

14. Polyesterfolie nach einem oder mehreren der Ansprüche 1 bis 13, **dadurch gekennzeichnet, dass** die metallisierte Folie bei einer Gesamtdicke von 12 µm eine Sauerstoffdurchlässigkeit (OTR) von kleiner als 0,5 cm$^3 \cdot$ m$^{-2} \cdot$ d$^{-1} \cdot$ bar$^{-1}$ aufweist.

15. Polyesterfolie nach einem oder mehreren der Ansprüche 1 bis 14, **dadurch gekennzeichnet, dass** die keramisch beschichtete Folie bei einer Gesamtdicke von 12 µm eine Sauerstoffdurchlässigkeit (OTR) von kleiner als 1 cm$^3 \cdot$ m$^{-2} \cdot$ d $^{-1} \cdot$ bar$^{-1}$ aufweist.

16. Polyesterfolie nach einem oder mehreren der Ansprüche 1 bis 15, **dadurch gekennzeichnet, dass** die unbeschichtete Folie einen Glanz von größer als 80 aufweist.

**17.** Polyesterfolie nach einem oder mehreren der Ansprüche 1 bis 16, **dadurch gekennzeichnet, dass** die unbeschichtete Folie eine Trübung von kleiner als 20 % aufweist.

**18.** Polyesterfolie nach einem oder mehreren der Ansprüche 1 bis 17, **dadurch gekennzeichnet, dass** bei der Herstellung das sequenzielle Streckverfahren eingesetzt wird.

**19.** Verfahren zur Herstellung einer Polyesterfolie nach einem oder mehreren der Ansprüche 1 bis 18 umfassend die Schritte

   a) Herstellen der Folie durch Extrusion oder Koextrusion,
   b) sequenzielles Strecken der Folie,
   c) Thermofixieren der gestreckten Folie und
   d) Aufbringen der Metall- oder Keramikschicht auf die thermofixierte Folie.

**20.** Verfahren nach Anspruch 19, **dadurch gekennzeichnet, dass** die Folie zunächst in Maschinenrichtung und dann in Querrichtung verstreckt wird.

**21.** Verfahren nach Anspruch 19 oder 20, **dadurch gekennzeichnet, dass** die Streckung in Maschinenrichtung in 2 Stufen erfolgt.

**22.** Verwendung einer Polyesterfolie nach einem oder mehreren der Ansprüche 1 bis 18 als Verpackungsmaterial, insbesondere für Nahrungs- und Genussmittel.

**Fig. 1** — Polyester + MXD6

**Fig. 2**
- A-Polyester (+MXD6)
- B-Polyester + MXD6
- C-Polyester (+MXD6)

**Fig. 3**

$\lambda_{MD}$

70  70  80  85  90  90

**Fig. 4**

$\lambda_1$  $\lambda_2$  $\lambda_{MD} = \lambda_1 \cdot \lambda_2$

70  80  85  90  105  110  110

**EP 1 609 814 A1**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | PATENT ABSTRACTS OF JAPAN Bd. 2002, Nr. 04, 4. August 2002 (2002-08-04) & JP 2001 347592 A (UNITIKA LTD), 18. Dezember 2001 (2001-12-18) * Zusammenfassung * ----- | 1-17,22 | C08J7/04 |

RECHERCHIERTE SACHGEBIETE (Int.Cl.7)

C08J
C08L

Der vorliegende Recherchenbericht wurde für alle Patentansprüche erstellt

| Recherchenort | Abschlußdatum der Recherche | Prüfer |
|---|---|---|
| Den Haag | 11. Oktober 2005 | Schlicke, B |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 05 01 3097

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-10-2005

| Im Recherchenbericht angeführtes Patentdokument | Datum der Veröffentlichung | Mitglied(er) der Patentfamilie | Datum der Veröffentlichung |
|---|---|---|---|
| JP 2001347592 A | 18-12-2001 | KEINE | |

Für nähere Einzelheiten zu diesem Anhang : siehe Amtsblatt des Europäischen Patentamts, Nr.12/82

EPO FORM P0461